# EUROPEAN PATENT SPECIFICATION

(11) **EP 0 945 251 B1**
(45) Date of publication and mention of the grant of the patent: **17.12.2003**
(21) Application number: 99302144.3
(22) Date of filing: 19.03.1999
(51) Int. Cl.: B32B 3/24, A47L 13/16, D04H 13/00

(54) **Multi-ply cleaning sheet**
Mehrschichtiges Reinigungstuch
Feuille de nettoyage multicouche

(30) Priority: 25.03.1998 JP 7798198
(43) Date of publication of application: 29.09.1999
(73) Proprietor: UNI-CHARM CORPORATION, Kawanoe-shi Ehime-ken (JP)
(72) Inventor: Tanaka, Yoshinori, c/o Research & Development Div., Mitoyo-gun, Kagawa-ken 769-1602 (JP); Kenmochi,Yasuhika, c/o Research & Development Div., Mitoyo-gun, Kagawa-ken 769-1602 (JP); Suga, Ayami, c/o Research & Development Division, Mitoyo-gun, Kagawa-ken 769-1602 (JP)
(74) Representative: Parry, Christopher Stephen

(56) References cited:
- US-A- 4 239 792
- US-A- 5 030 500

## Description

The present invention relates to a cleaning sheet and, more particularly, to a multi-ply cleaning sheet which is easy to use and capable of catching dirt efficiently.

Various cleaning sheets made of fibers have been in general use. Among others, a disposable cleaning sheet of nonwoven fabric, which is attached to a mop or the like when in use, is common on the market because of its handiness.

These cleaning sheets need good cleaning efficiency.

An example of them is disclosed in Registered Japanese Utility Model Publication No. 3003082. It is capable of absorbing water and scrapes and absorbs dirt efficiently; however, it has a disadvantage of getting hands and the mop holder soiled with dirt passing from the face to the reverse through holes made therein.

Similar cleaning sheets having appertures therein are disclosed in US patent numbers 4, 239, 792 and 5, 030, 500.

It is an object of the present invention to provide a multi-ply cleaning sheet which is easy to use and capable of catching dirt efficiently.

It is another object of the present invention to provide a multi-ply cleaning sheet to be attached to a mop or the like when in use.

The present invention provides a multi-ply cleaning sheet(s) comprising: two first layers with a plurality of holes passing therethrough; and a second layer held between the two first layers, the fist layers being a nonwoven fabric of which the holes are formed by water jet or needle punch so that one surface of the first layer has fuzz projecting from a periphery of each hole in the direction of water jet or needle punch, wherein
the first layers are bonded to the second layer such that the surface having the fuzz faces outward of the cleaning sheet, whereby the holes are open at the surface having the fuzz but closed at the other surface of the first layer by the second layer.

In the multi-ply cleaning sheet according to the present invention, the first layer having the holes is used as a wiping surface. The holes formed on the first layer can efficiently scrape off dirt by steps at their edges. Being closed by the second layer, these holes can hold the scraped dirt therein without permitting it to penetrate to the reverse of the cleaning sheet. In addition, the multi-layer structure imparts sufficient stiffness to the cleaning sheet, facilitating its handling at the time of cleaning.

According to the present invention, it is preferred that the first later is of nonwoven fabric 0.4-1.0 mm thick with a basis weight of 10-100 g/m². In addition, the holes should preferably be formed by water jet or needle punch. The holes formed by water jet should preferably be elliptic, 1-5 mm in major axis and 0.2-3 mm in minor axis. There should preferably be 10-100 holes per cm² in the first layer.

In this case, the first layer has one surface made fuzzy by water jet or needle punch. In order to enhance the collecting effect of fine dirt and hairs, the other surface of the first layer than the fuzzy surface is bonded to the second layer.

The multi-ply cleaning sheet of the present invention can be used for dry wiping as well as wet wiping. It is desirable that the nonwoven fabric for the first layer be composed of at least one kind of absorbent fibers (selected from rayon and cotton) and at least one kind of hydrophobic fibers (selected from polyethylene, polypropylene and polyester). It is also desirable that the first and second layers contain a thermoplastic resin and are bonded together with a plurality of fusion-bonding lines formed by fusion-bonding. The second layer should preferably be a thermal bond nonwoven fabric with a basis weight no less than 30 g/m².

Embodiments of the invention will now be described, by way of example only, with reference to the accompanying drawings, in which:
Fig. 1(A) is a partial perspective view showing the structure of a multi-ply cleaning sheet according to the present invention;
Fig. 1(B) is a partly enlarged perspective view illustrating the structure of a multi-ply cleaning sheet according to the present invention;
Fig. 2 is a partly enlarged perspective view illustrating one example of the structure of a multi-ply cleaning sheet according to the present invention;
Fig. 3 is a plan view showing one example of the pattern of bonding lines of a multi-ply cleaning sheet according to the present invention;
Fig. 4 is a plan view showing another example of the pattern of bonding lines of a multi-ply cleaning sheet according to the present invention; and
Fig. 5 is a perspective view showing one way in which a multi-ply cleaning sheet of the present invention is used.

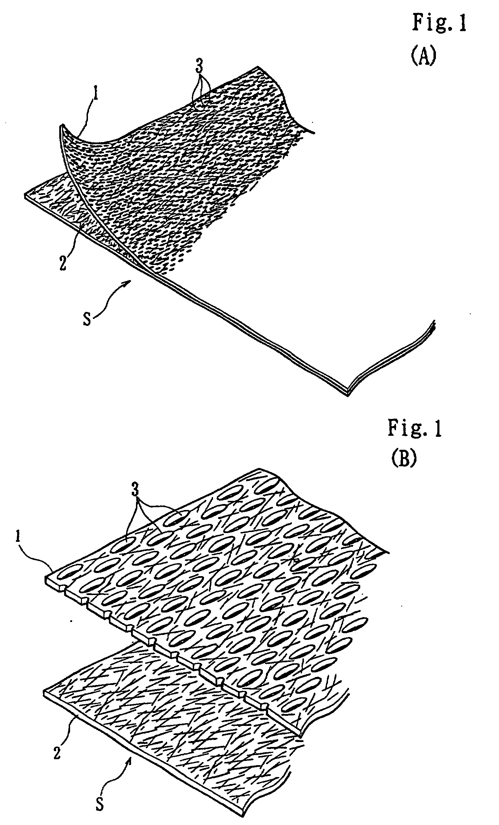

Attention is drawn to the fact that not all of the embodiments of the "invention" presented below are covered by the claims. Attention is particularly drawn to the fact that no protection is sought for the embodiments described with reference to Figures 1(A) and 1(B), which comprise only one first layer (1).

The present invention will be described in more detail with reference to the drawings. Fig. 1(A) is a partial perspective view showing the structure of a multi-ply cleaning sheet according to the present invention. Fig. 1(B) is a partly enlarged perspective view illustrating in more detail the structure of the multi-ply cleaning sheet shown in Fig. 1(A).

Referring to Fig. 1(A), the multi-ply cleaning sheet indicated by "S" is composed of a first layer 1 with a plurality of holes 3 passing through it and a second layer 2 without holes. The first layer 1 constitutes a wiping surface at the time of cleaning.

The structure of the multi-ply cleaning sheet "S" is shown enlarged in Fig. 1(B). It is to be noted that the first layer 1 is placed on the second layer 2 so that the holes 3 passing through the first layer 1 are open at one surface of the first layer 1 and closed by the second layer 2 at the other surface of the first layer 1. This structure permits the holes 3 to scrape dirt and to hold the scraped dirt therein, without allowing the scraped dirt to pass through the second layer 2. Therefore, the hand or mop handle holding the second layer 2 does not soil at the time of cleaning. In this way, the cleaning sheet "S" can be used with comfort.

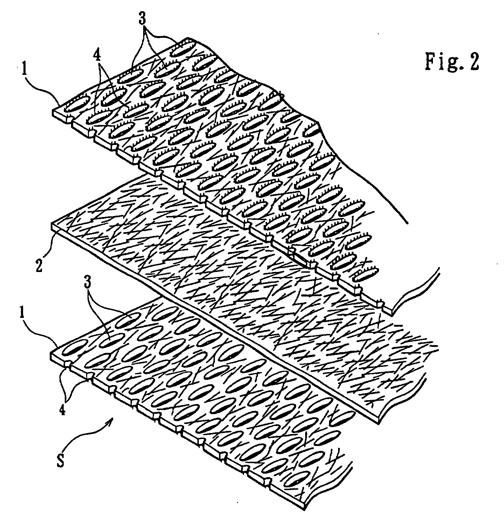

According to the present invention, the multi-ply cleaning sheet "S" is preferably a triple-layer structure having an additional first layer 1 attached to the lower side of the second layer 2, as shown in Fig. 2. In this case, the multi-ply cleaning sheet "S" has the first layers 1 and 1 on both sides thereof, so that it can be turned over for cleaning. Moreover, a multi-layer structure with four or more layers is possible, in which two or more of the second layer 2 are interposed between two of the first layer 1. The resulting multi-ply cleaning sheet will have an adequate strength and elasticity if the individual layers constituting it are properly selected.

The first layer 1 is a nonwoven fabric, particularly a fiber-interlaced nonwoven fabric such as spunlace nonwoven fabric, which permits the holes 3 to be made comparatively easily and is economical in production.

Nonwoven fabric as the first layer 1 may be produced from fibers of polyethylene (PE), polypropylene (PP), polyester (PET), nylon, rayon, cotton, etc. When the first layer 1 contains absorbent fibers, such as of rayon and cotton, the first layer 1 becomes water-retentive. Therefore, the water-retentivity of the multi-ply cleaning sheet "S" as a whole can be improved when it is used for wet wiping. Furthermore, when the first layer 1 contains hydrophobic fibers, such as of PE, PP and PET, the first layer 1 permits dirty water to be retained by the intermediate second layer 2 and prevents the dirty water from flowing back to the surface of the multi-ply cleaning sheet "S" during wet wiping.

The nonwoven fabric as the first layer 1 should preferably have a basis weight of 10-100 g/m², more preferably about 40 g/m², so that it permits the holes 3 to be made easily.

In addition, the first layer 1 should preferably be 0.3-2.0 mm thick, more preferably 0.4-1.0 mm thick, so that it permits the holes 3 to be made easily.

The first layer 1 being a nonwoven fabric, the holes 3 are made in the production process of the nonwoven fabric by applying water jet or needle punch. Water jet or needle punch are employed because of their easy operation to make the holes 3 with a desired shape, size and number. For example, in the case of using water jet, a spunlace nonwoven fabric as the first layer 1 is produced by applying water jet to a fibrous web placed on a mesh with a desired opening pattern, thereby interlacing fivers to have the holes 3.

The holes 3 should preferably be 1-5 mm in diameter. The holes 3 may be elliptic if they are formed by using water jet. Such elliptic holes 3 should have major axis of about 1-5 mm (in the machine direction in which the web runs) and a minor axis of about 0.2-3 mm. The first layer 1 should have 10 to 100 holes per cm² so that the multi-ply cleaning sheet "S" catches dirt effectively.

Since the holes 3 are made in the production process of the nonwoven fabric by using water jet or needle punch, the nonwoven fabric becomes fuzzy (fluffy), with fuzz 4 projecting from the periphery of each hole 3 in the direction of water jet or needle punch, as shown in Fig. 2. The fuzz 4 facing outward can enhance collecting effect of fine dirt and hairs significantly.

The second layer 2 may be made of any material, such as nonwoven fabric, plastic film, cloth of synthetic fibers, sponge and polyurethane, which endures cleaning work. It may be used alone or in combination with another one of the same or different kind. A preferred example of the second layer 2 is a thermal bond nonwoven fabric having a basis weight no less than 30 g/m². It will impart additional strength and elasticity to the multi-ply cleaning sheet "S", improving ease of use.

The second layer 2 may contain absorbent fibers and hydrophilic fibers in order that the multi-ply cleaning sheet "S" as a whole is improved in water retentivity at the time of wet wiping.

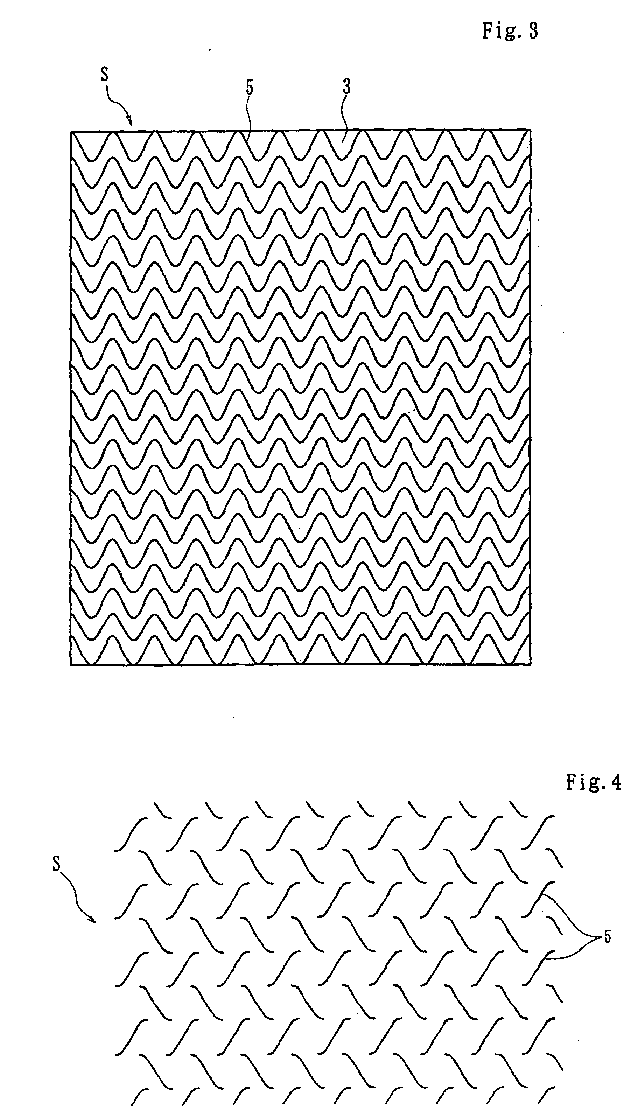

In the case where both the first layer 1 and the second layer 2 are nonwoven fabrics, they should preferably contain a thermoplastic resin so that they are fusion-bonded together easily by thermal embossing or ultrasonic welding. In this case, it is preferred that bonding lines 5 are formed by fusion-bonding as shown Fig. 3. Because the cleaning sheet "S" is recessed at the bonding lines 5 due to fusion-binding, the bonding lines 5 can further improve the wiping effect of the cleaning sheet "S". A desired pattern of the bonding lines 5 is shown in Fig. 3. Such bonding lines 5 can further enhance the strength of the multi-ply cleaning sheet "S". Another preferred pattern of the bonding lines 5 is shown in Fig. 4. Because the pattern of fusion-bonding is not specifically restricted, any pattern such as dot pattern can be adopted. However, in the present invention, continuous boding lines of wavy or sawtooth pattern as shown in Fig. 3 and short intermittent bonding lines as shown in Fig. 4 are desirable, because these bonding lines extending in different directions can improve the wiping effect. Alternatively, the first and second layers of the multi-ply cleaning sheet "S" may be bonded together by means of an adhesive.

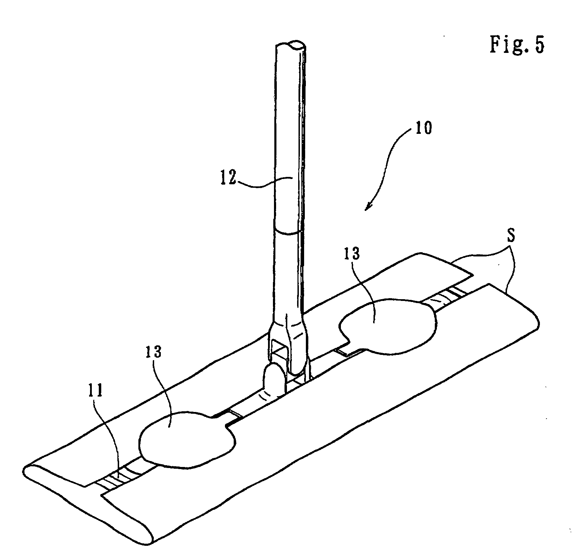

The multi-ply cleaning sheet "S" of the present invention may be used in such a way as shown in Fig. 5. The multi-ply cleaning sheet "S" is attached to a mop 10 consisting of a plate 11 and a handle 12, such that one of the first layers 1 faces outward and rubs the floor or any object to be cleaned. Both sides of the cleaning sheet "S" are folded back onto the upper side of the plate 11 and fastened thereto by clips 13, 13.

Moreover, the multi-ply cleaning sheet "S" of the present invention may be used by holding with hands or a handy mop. It may be used for both dry wiping and wet wiping.

The multi-ply cleaning sheet "S" of the present invention may be incorporated with an agent to promote dirt attraction if it is used for dry wiping. Examples of the agent include mineral oil such as paraffin oil, synthetic oil such as polyolefin oil, silicone oil, and surfactant.

Other agents than mentioned above may also be used to enhance the wiping effect or produce the lustering effect or the like. Their examples include surfactants, alkalis, abrasives, coatings (acrylic resin and latex), lustering agents, wax, antistatic agents, deodorants, humectants, and antibacterial agents.

While in the foregoing specification this invention has been described in relation to preferred embodiments and many details have been set forth for purpose of illustration it will be apparent to those skilled in the art that the invention is susceptible to additional embodiments and that certain of the details described herein can be varied considerably without departing from the basic principles of the invention, which is defined by the appended claims.

Further, 'comprises/comprising' when used in this specification is taken to specify the presence of stated features, integers, steps or components but those not preclude the presence or addition of one or more other features, integers, steps, components or groups thereof.

## Claims

1. A multi-ply cleaning sheet ('S') comprising: two first layers (1) with a plurality of holes (3) passing therethrough; and a second layer (2) held between the two first layers, the fist layers (1) being a nonwoven fabric of which the holes are formed by water jet or needle punch so that one surface of the first layer has fuzz (4) projecting from a periphery of each hole (3) in the direction of water jet or needle punch, wherein
the first layers (1) are bonded to the second layer (2) such that the surface having the fuzz (4) faces outward of the cleaning sheet, whereby the holes (3) are open at the surface having the fuzz (4) but closed at the other surface of the first layer by the second layer.

2. A multi-ply cleaning sheet as defined in claim 1, wherein the holes (3) are formed by water jet to be elliptic ones having a major axis of 1-5 mm and a minor axis of 0.2-3 mm and the density of the holes (3) in the first layer is 10-100 per cm².

3. A multi-ply cleaning sheet as defined in claim 2, wherein the nonwoven fabric comprises at least one kind of absorbent fibers selected from the group consisting of rayon and cotton and at least one kind of hydrophobic fibers selected from the group consisting of polyethylene, polypropylene and polyester.

4. A multi-ply cleaning sheet as defined in claim 3, wherein the first layer has a basis weight of 10-100 g/m² and a thickness of 0.4-1.0 mm and the second layer is a thermal bond nonwoven fabric having a basis weight no less than 30 g/m², wherein the first and second layers (1, 2) contain a thermoplastic resin and are fusion-bonded together to form a plurality of bonding lines (5).

## Patentansprüche

1. Mehrschichtiges Reinigungstuch ('S') mit: zwei ersten Schichten (1) mit mehreren Durchtrittslöchern (3); und einer zweiten Schicht (2) die zwischen den zwei ersten Schichten gehalten wird, wobei die ersten Schichten (1) ein Vliesgewebe sind, in das die Löcher durch einen Wasserstrahl oder Nadelstich geformt wurden, so daß eine Fläche der ersten Schicht Ausfransungen (4) aufweist, die vom Umfang jedes Lochs (3) in Richtung des Wasserstrahls oder des Nadelstichs hervorragen, wobei
die ersten Schichten (1) so mit der zweiten Schicht (2) verbunden sind, daß die Fläche mit den Ausfransungen (4) auf dem Reinigungstuch nach außen weist, wodurch die Löcher (3) an der Fläche mit den Ausfransungen (4) offen sind, während sie an der anderen Fläche der ersten Schicht durch die zweite Schicht geschlossen sind.

2. Mehrschichtiges Reinigungstuch nach Anspruch 1, wobei die Löcher (3) durch den Wasserstrahl elliptisch geformt sind und eine große Achse von 1-5 mm und eine kleine Achse von 0,2-3 mm aufweisen, und die Dichte der Löcher (3) in der ersten Schicht 10-100 pro cm² beträgt.

3. Mehrschichtiges Reinigungstuch nach Anspruch 2, wobei das Vliesgewebe absorbierende Fasern aus Viskose und/oder Baumwolle, sowie hydrophobe Fasern aus Polyethylen, Polypropylen und/oder Polyester aufweist.

4. Mehrschichtiges Reinigungstuch nach Anspruch 3, wobei die erste Schicht ein Basisgewicht von 10-100 g/m² und eine Dicke von 0,4-1,0 mm aufweist, und die zweite Schicht in einem wärmeverbundenen Vliesgewebe besteht, das ein Basisgewicht von mindestens 30 g/m² aufweist, wobei die erste und die zweite Schicht (1, 2) ein thermoplastisches Harz enthalten und miteinander schmelzverbunden sind, um Verbindungslinien (5) zu bilden.

## Revendications

1. Feuille de nettoyage multicouches (S) comprenant : deux premières couches (1) comportant une pluralité de trous (3) les traversant et une seconde couche (2) maintenue entre les deux premières couches, les premières couches (1) étant une étoffe non tissée dont les trous sont formés par jet d'eau ou aiguilletage de telle sorte qu'une surface de la première couche comporte des peluches (4) saillant de la périphérie de chaque trou (3) dans la direction du jet d'eau ou de l'aiguilletage, dans laquelle
les premières couches (1) sont liées à la seconde couche (2) de telle sorte que la surface comportant les peluches (4) soit orientée vers l'extérieur de la feuille de nettoyage, grâce à quoi les trous (3) sont ouverts à la surface comportant les peluches (4), mais sont fermés à l'autre surface de la première couche par la seconde couche.

2. Feuille de nettoyage multicouches selon la revendication 1, dans laquelle les trous (3) sont formés par jet d'eau pour constituer des trous elliptiques ayant un grand axe de 1 à 5 mm et un petit axe de 0,2 à 3 mm, et la densité des trous (3) dans la première couche est de 10 à 100 par cm².

3. Feuille de nettoyage multicouches selon la revendication 2, dans laquelle l'étoffe non tissée comprend au moins un type de fibres absorbantes choisies parmi le groupe constitué de la rayonne et du coton, et au moins un type de fibres hydrophobes choisies parmi le groupe constitué du polyéthylène, du polypropylène et du polyester.

4. Feuille de nettoyage multicouches selon la revendication 3, dans laquelle la première couche a un grammage de 10 à 100 g/m² et une épaisseur de 0,4 à 1, 0 mm, et la seconde couche est une étoffe non tissée liée à chaud ayant un grammage qui n'est pas inférieur à 30 g/m², dans laquelle les premières et seconde couches (1, 2) contiennent une résine thermoplastique et sont liées ensemble par fusion pour former une pluralité de lignes de liaison (5).
